# EUROPEAN PATENT SPECIFICATION

(11) **EP 4 543 060 B1**
(45) Date of publication and mention of the grant of the patent: **09.09.2026**
(21) Application number: 23851528.2
(22) Date of filing: 11.07.2023
(51) Int. Cl.: H04W 4/70, H04W 72/04, H04L 5/00, H04L 27/00

(54) **SIDELINK RESOURCE SELECTION METHOD AND APPARATUS, AND TERMINAL**
VERFAHREN UND VORRICHTUNG ZUR AUSWAHL VON SIDELINK-RESSOURCEN UND ENDGERÄT
PROCÉDÉ ET APPAREIL DE SÉLECTION DE RESSOURCES DE LIAISON LATÉRALE ET TERMINAL

(30) Priority: 08.08.2022 CN 202210948342
(43) Date of publication of application: 23.04.2025
(73) Proprietor: CICT Connected and Intelligent Technologies Co., Ltd., Chongqing 400041 (CN)
(72) Inventor: WANG, Yakun, Chongqing 400000 (CN); ZHAO, Rui, Chongqing 400000 (CN); WEN, Xiaoran, Chongqing 400000 (CN); ZHENG, Shilei, Chongqing 400000 (CN); ZHAO, Li, Chongqing 400000 (CN)
(74) Representative: Murgitroyd & Company
(86) International application number: PCT/CN2023/106794
(87) International publication number: WO 2024/032303

(56) References cited:
- EP-A1- 4 319 362
- EP-A1- 4 572 508
- CN-A- 110 545 533
- CN-A- 111 093 287
- CN-A- 111 435 909
- CN-A- 114 586 390
- US-A1- 2021 091 901
- MODERATOR (HUAWEI): "FL summary#2 for AI 9.4.1.2 SL-U physical channel design framework", vol. RAN WG1, no. e-Meeting; 20220509 - 20220520, 18 May 2022 (2022-05-18), XP052191876, Retrieved from the Internet <URL:https://ftp.3gpp.org/tsg_ran/WG1_RL1/TSGR1_109-e/Docs/R1-2205239.zip R1-2205239 FLS#2 for AI 9.4.1.2 SL-U PHY channel design.docx> [retrieved on 20220518]

## Description

### CROSS-REFERENCE TO RELATED APPLICATIONS

The present application claims priority to Chinese Patent Application No. 202210948342.0, filed in China on August 08, 2022.

### TECHNICAL FIELD

The present application relates to the field of communication technologies, and in particular, to a sidelink resource selection method and apparatus, and a terminal.

### BACKGROUND

A terminal device operating in an unlicensed band (Unlicensed Spectrum) is required to meet limitations on an occupied channel bandwidth (Occupied Channel Bandwidth, OCB) and power spectral density (Power Spectral Density, PSD). Therefore, the interlaced resource block (Interlaced Resource Block, IRB) structure is introduced in new radio on unlicensed spectrum (New Radio on Unlicensed Spectrum, NR-U). Currently, in discussions about the mechanism of sidelink on unlicensed spectrum (Sidelink on Unlicensed Spectrum, SL-U), the IRB is one of the candidate solutions. However, there is currently not yet a complete solution. CN114586390A provides a resource indication method, in which a first terminal device sends first-stage direct connection link control information SCI to a second terminal device based on a frequency domain resource allocation granularity; the SCI at the first stage comprises a frequency domain resource allocation domain, and the frequency domain resource allocation domain is used for indicating frequency domain resources occupied by the first terminal equipment. US2021/091901A1 provides methods related to sidelink communications in a shared radio frequency band, in which first user equipment receives, from a base station, a configuration for frequency-interlaced resources in a shared radio frequency band for sidelink communication between the first UE and a second UE, and the first UE communicates, with the second UE, the sidelink communication using the frequency-interlaced resources. HUAWEI (FL summary#2 for AI 9.4.1.2 SL-U physical channel design framework" 3GPP DRAFT; R1-2205239) provides discussions related SL-U physical channel design framework (AI 9.4.1.2), including summary of contributions, email discussions, outcomes of the meeting, etc. EP4319362A1 belongs to the prior-art under Article 54(3) EPC and provides a method in which a first wireless device may communicate with a second wireless device using sidelink resources. For a sidelink transmission on a shared spectrum, a quantity of subchannels of a sidelink resource pool (RP) may be used for indicating a resource block (RB) interlace.

### SUMMARY

An objective of the present application is to provide a sidelink resource selection method and apparatus, and a terminal, so as to resolve a problem that no complete implementation solution is currently formed for the mechanism of sidelink on unlicensed spectrum. The invention is set out in the appended set of claims.

### BRIEF DESCRIPTION OF THE DRAWINGS

FIG. 1 is a schematic diagram of frequency domain resource configuration of a resource pool in the related art.
FIG. 2 is a schematic diagram of a correspondence between an IRB index and a PRB index in NR-U.
FIG. 3 is a schematic flowchart 1 of a sidelink resource selection method according to an embodiment of the present application.
FIG. 4 is a schematic flowchart 2 of a sidelink resource selection method according to an embodiment of the present application.
FIG. 5 is a schematic diagram of a definition of sub-channels according to an embodiment of the present application.
FIG. 6 is a schematic diagram of indexes of sub-channels according to an embodiment of the present application.
FIG. 7 is a schematic diagram of a sub-channel size according to an embodiment of the present application.
FIG. 8 is a schematic diagram of resource selection in a case of a plurality of sub-bands according to an embodiment of the present application.
FIG. 9A is a schematic diagram 1 of a mapping relationship between a PSSCH resource and a PSFCH resource according to an embodiment of the present application.
FIG. 9B is a schematic diagram 2 of a mapping relationship between a PSSCH resource and a PSFCH resource according to an embodiment of the present application.
FIG. 9C is a schematic diagram 3 of a mapping relationship between a PSSCH resource and a PSFCH resource according to an embodiment of the present application.
FIG. 10 is a schematic structural diagram 1 of a sidelink resource selection apparatus according to an embodiment of the present application.
FIG. 11 is a schematic structural diagram 2 of a sidelink resource selection apparatus according to an embodiment of the present application.
FIG. 12 is a schematic structural diagram of a terminal according to an embodiment of the present application.

### DETAILED DESCRIPTION OF THE EMBODIMENTS

To make the technical problems to be resolved, technical solutions, and advantages of the present application clearer, the following describes the present application in detail with reference to the accompanying drawings and specific embodiments. In the following description, specific details such as specific configuration and components are provided only to help fully understand embodiments of the present application. Therefore, a person skilled in the art should understand that various changes and modifications may be made to the embodiments described herein without departing from the scope of the present application. In addition, for clarity and simplicity, descriptions of known functions and constructions are omitted.

It should be understood that, "one embodiment" and "an embodiment" throughout this specification means that specific features, structures or characteristics related to the embodiments may be included in at least one embodiment of the present application. Therefore, descriptions of "in one embodiment" or "in an embodiment" in various places throughout this specification do not necessarily refer to a same embodiment. In addition, the specific features, structures, or characteristics may be combined in one or more embodiments in any appropriate manner.

In embodiments of the present application, it should be understood that, sequence numbers of the foregoing processes do not mean execution sequences. The execution sequences of the processes should be determined based on functions and internal logic of the processes, and should not be construed as any limitation on the implementation processes of embodiments of the present application.

In embodiments of the present application, it should be understood that, "B that corresponds to A" means that B is associated with A, and B can be determined based on A. However, it should be further understood that determining B according to A does not mean determining B according to A only, and may further determine B according to A and/or other information.

When the embodiments of the present application are described, some concepts used in the following description are first explained.

### 1. Unlicensed spectrum:

Unlicensed spectrum can be used for free by any group or individual without applying for it. For example, some commonly used technologies such as Wi-Fi and Bluetooth use unlicensed bands. In order to avoid inter-system interference, it is required to avoid interference to other systems as much as possible when using unlicensed bands. Therefore, the listen before talk (Listen Before Talk, LBT) technology is introduced, in which it is required to listen on the channel before accessing a channel and access the channel only when the system is detected to be idle.

For a terminal device operating in an unlicensed band, its occupied channel bandwidth (Occupied Channel Bandwidth, OCB) is required to meet an 80% limit. Regarding the 80% limit on the OCB, further clarification is provided: the 80% limit on the OCB is on an LBT sub-band (which has a size of 20 MHz) basis. For example, in a case that a current total bandwidth is 20 MHz, that is, the current total bandwidth is one LBT sub-band, the transmission of the terminal is required to meet the 80% limit on the OCB. If a current total bandwidth is 40 MHz, that is, the current total bandwidth includes two LBT sub-bands, in a case that the terminal performs transmission in an upper LBT sub-band or a lower LBT sub-band, an occupied bandwidth is required to be greater than or equal to 80% of a corresponding LBT sub-band (that is, 80% of 20 MHz). In a case that the terminal is required to span across two LBT sub-bands for transmission, a bandwidth occupied in each corresponding LBT sub-band is required to mee the 80% limit. In conclusion, no matter how many LBT sub-bands are occupied by the terminal for transmission, a bandwidth occupied in each LBT sub-band is required to meet the 80% limit.

### II. R16 NR-V2X frequency domain resource configuration

Parameters related to frequency domain resource configuration of a resource pool are as follows:

**Table 1**

| Parameter name | Function |
|---|---|
| sl-SubchannelSize-r16 | Indicates a minimum granularity in frequency domain in a resource sensing process. It may be understood as a sub-channel size or a quantity of physical resource blocks (Physical Resource Block, PRB) included in a sub-channel, which may be {10, 12, 15, 20, 25, 50, 75, 100}. |
| sl-StartRB-Subchannel-r16 | Indicates an index of a start PRB of a sub-channel with a minimum index in a resource pool |
| sl-NumSubchannel-r16 | Indicates a quantity of sub-channels in a resource pool, supporting only consecutive PRBs. |
| sl-RB-Number-r16 | Indicates a total quantity of PRBs in a resource pool, with a remaining resource block (Remaining RB) unavailable for use. The remaining RB refers to a PRB not included in any sub-channel in a resource pool. |

In the R16 phase, a resource pool for new radio-vehicle to everything (New Radio-Vehicle to everything, NR-V2X) supports only consecutive PRBs in frequency domain. If PRBs allocated to the resource pool are not an integer multiple of a sub-channel size, to reduce excessive modifications to conclusions already made, it is decided not to use remaining PRBs.

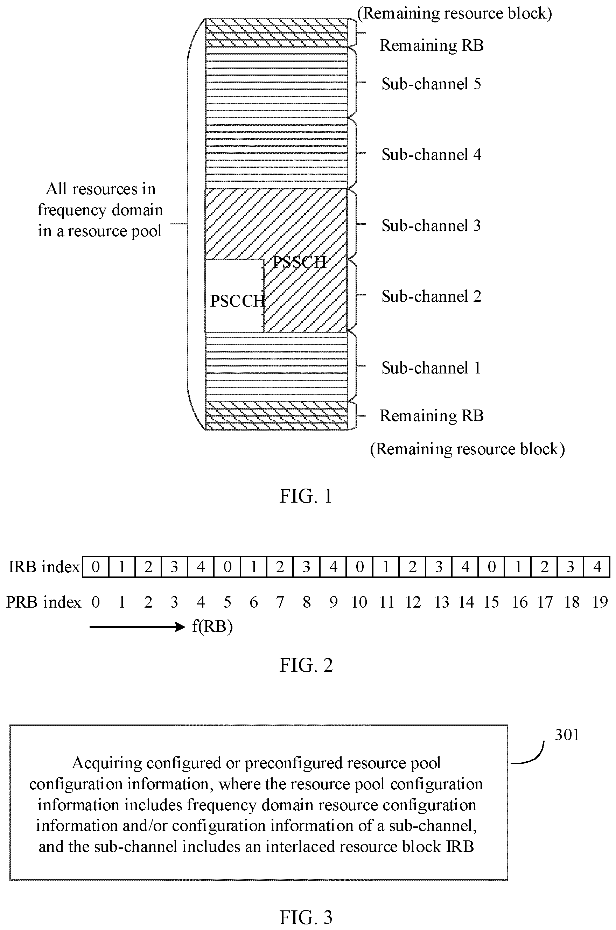

As shown in FIG. 1, it is assumed that a total of 58 PRBs are included in frequency domain, and each sub-channel includes 10 consecutive PRBs. Therefore, a total of five sub-channels and eight remaining RBs are included in the frequency domain, and an index of a start PRB in a sub-channel 1 is 4 (an index of a lowest PRB in a resource pool is 0). Resources allowed to be used for transmission in the resource pool are sub-channels 1 to 5, and the upper four remaining RBs and the lower four remaining RBs are not allowed to be used for transmission. A resource used for transmission by a device can be only consecutive sub-channels (for example, in FIG. 1, a sub-channel #2 and a sub-channel #3 are occupied for transmission by the terminal).

### III. IRB

In the NR-U system, considering regulatory requirements, the design of IRB is introduced, that is, two consecutive available resource blocks are spaced by M resource blocks. For an IRB index m, included PRBs are {m, m+M, m+2M, m+3M, ...}, where m ∈ {0, 1, ..., M-1}, that is, each IRB includes a plurality of PRBs at an interval of M. In the NR-U system, an IRB structure is defined for each of a 15 kHz subcarrier spacing and a 30 kHz subcarrier spacing, as shown in the table below:

**Table 2**

| µ | Subcarrier spacing | Value of M |
|---|---|---|
| 0 | 15 kHz | 10 |
| 1 | 30 kHz | 5 |

For example, as shown in FIG. 2, an IRB #0 includes a PRB #0, a PRB #5, a PRB #10, and a PRB #15. An IRB #1 includes a PRB #1, a PRB #6, a PRB #11, a PRB #16; and so on. All transmission resources for the terminal are on an IRB basis, for example, the IRB #1 or the IRB #1 and an IRB #2 are occupied for transmission by the terminal.

Therefore, assuming that the UE needs to occupy four PRBs, if applying occupation of consecutive PRBs (assuming that the PRB #0 to the PRB #3 are occupied), an OCB is 4/20 = 20%. If the IRB design is used (assuming that the IRB #0 is occupied), an OCB is 16/20 = 80%, meeting the OCB requirement.

### IV. Channel access

A terminal operating in an unlicensed band needs to perform channel detection before channel access. Only when a channel is detected to be idle, the terminal can access the channel and transmit a service to be transmitted. The channel access includes the following methods:

### (1) Type (Type) 1 channel access method

A terminal first determines a channel access priority, and then determines related parameters of the channel access. The procedure is as follows:
Step 1: Set a counter N = Nᵢₙₜ, where Nᵢₙₜ is a uniform random number between 0 and CWₚ, and then perform Step 4.
Step 2: If N > 0, the terminal decrements the counter by 1, that is, N = N - 1.
Step 3: Perform detection on the channel in a listening slot with a length of Tsl (Tsl represents an LBT listening slot, with a length of 9 µs). If the channel in the listening slot is idle, perform Step 4; otherwise, perform Step 5.
Step 4: If N = 0, end the channel access procedure; otherwise, perform Step 2.
Step 5: Perform detection on the channel in a listening time interval with a length of T_{d} (where T_{d} = 16 + mₚ × 9 µs), where a result of the time interval detection is either that the channel in at least one listening slot is occupied or that the channel in all listening slots are idle.
Step 6: If the channel listening result is that the channel is idle in all sensing slots within the time Td, perform Step 4; otherwise, perform Step 5.

If the channel access procedure ends, the terminal is allowed to use the channel to transmit the service to be transmitted. A maximum time length for which the terminal can use the channel for transmission cannot not exceed T_{mcot, p}.

Values of parameters involved in the foregoing steps are shown in Table 3 below.

**Table 3**

| Channel access priority (p) | mₚ | CWₑ | CW_{max, p} | T_{mcot, p} | Allowed values of CW_{P} |
|---|---|---|---|---|---|
| 1 | 1 | 3 | 7 | 2 ms | {3, 7} |
| 2 | 1 | 7 | 15 | 3 ms | {7, 15} |
| 3 | 3 | 15 | 63 | 8 or 10 ms | {15, 31, 63} |
| 4 | 7 | 15 | 1023 | 8 or 10 ms | {15, 31, 63, 127, 255, 511, 1023} |

### (2) Type 2 channel access method

Type 2 channel access is a channel access method based on a fixed channel listening duration, which includes three methods:
Type 2A channel access: The UE listens on the channel for at least 25 µs before starting transmission, and performs transmission after the channel listening is successful.
Type 2B channel access: The UE listens on the channel for at least 16 µs before starting transmission, and performs transmission after the channel listening is successful.
Type 2C channel access: The UE directly performs transmission without channel listening. A gap between a start position of the transmission and an end position of the previous transmission is less than or equal to 16 µs, and a length of the transmission does not exceed 584 µs.

With reference to the accompanying drawings, the following describes in detail, by using specific examples and application scenarios thereof, the sidelink resource selection method provided in the embodiments of the present application.

As shown in FIG. 3, an embodiment of the present application provides a sidelink resource selection method. The method includes:
acquiring configured or preconfigured resource pool configuration information, where the resource pool configuration information includes frequency domain resource configuration information and/or configuration information of a sub-channel, and the sub-channel includes an interlaced resource block IRB.

In other words, the resource pool configuration information in embodiments of the present application may specifically include a definition of sub-channels with an IRB structure and other related content and/or frequency domain resource configuration information.

It should be noted herein that this embodiment of the present application may be specifically a resource selection method performed by a terminal for sidelink on unlicensed spectrum, but is not limited thereto.

According to the sidelink resource selection method in embodiments of the present application, configured or preconfigured resource pool configuration information is acquired, the resource pool configuration information includes frequency domain resource configuration information and/or configuration information of a sub-channel, and the sub-channel includes an interlaced resource block IRB. The sub-channel in the resource pool configured based on the resource pool configuration information includes PRBs distributed at intervals. Therefore, a resource selected during resource selection from the resource pool can meet OCB and PSD limitation requirements. In this way, a complete implementation solution can be formed for the resource selection mechanism for the sidelink on unlicensed spectrum.

The configuration information of a sub-channel includes at least one of the following:
indication information of the sub-channel;
a correspondence between the sub-channel and an IRB; and
a size of the sub-channel.

In a specific implementation, the correspondence between the sub-channel and an IRB includes:
each sub-channel consists of N consecutive IRBs located within a same resource block set (RB set), where N is a configured or preconfigured positive integer.

It should be noted herein that, first, the resource block set may be an LBT sub-band, or may be a basic frequency domain granularity of the LBT, that is, 20 MHz. Second, N may be only 1. Third, N consecutive IRBs refer to N IRBs with consecutive IRB indexes.

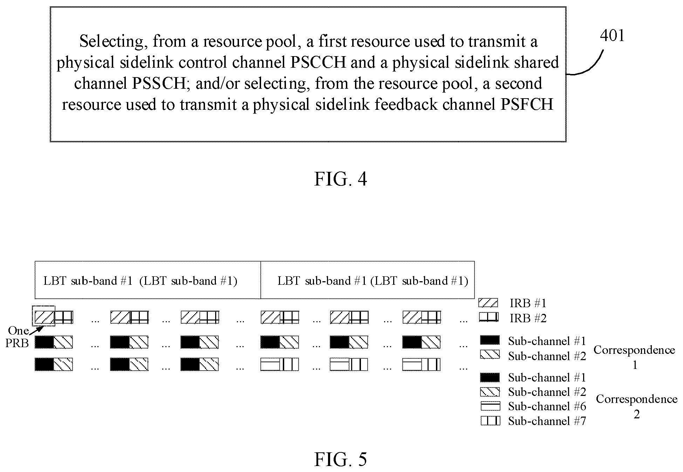

In a specific example of this specific implementation, as shown in FIG. 5, the resource pool includes two LBT sub-bands, with an SCS being configured as 30 kHz, and each RB set/LBT sub-band includes 50 PRBs. In this case, each IRB in the resource pool includes 20 PRBs. The correspondence between the sub-channel and an IRB is specifically as follows:
Solution 1: One sub-channel corresponds to one IRB in the resource pool (that is, N = 1).

In this manner, the sub-channel corresponds to the IRB in the resource pool. As shown by a correspondence 1 in FIG. 5, one sub-channel is one IRB in the resource pool (Resource pool), that is, one sub-channel includes 20 PRBs, for example, a sub-channel #1 is an IRB #1, and PRB indexes corresponding to the sub-channel are {PRB #1, PRB #6, PRB #11, ..., PRB #96}; and a sub-channel #2 is an IRB #2, and PRB indexes corresponding to the sub-channel are {PRB #2, PRB #7, PRB #12, ..., PRB #97}.

Solution 2: One sub-channel corresponds to one IRB in an LBT sub-band/RB set (that is, N = 1).

In this manner, the sub-channel corresponds to an IRB in an LBT sub-band. As shown by a correspondence 2 in FIG. 5, one sub-channel includes a part of one IRB that is located within one LBT sub-band. For example, a sub-channel #1 includes a part of an IRB #1 that is located within an LBT sub-band 1. In this case, one sub-channel includes 10 PRBs, PRB indexes corresponding to the sub-channel #1 are {PRB #1, PRB #6, PRB #11, ..., PRB #46}, and PRB indexes corresponding to a sub-channel #6 are {PRB #51, PRB #56, PRB #61, ..., PRB #96}.

Further, in an optional implementation, in a case that the N consecutive IRBs are located within the same resource pool, the indication information of the sub-channel includes any one of the following:
an index of a start IRB in the N consecutive IRBs and a quantity of the IRBs; and
indexes of all IRBs in the N consecutive IRBs.

For example, the start IRB and subsequent (N-1) IRBs in the resource pool constitute a first sub-channel, and the second IRB and subsequent (N-1) IRBs constitute a second sub-channel, and so on. The start IRB does not necessarily correspond to an IRB with a minimum IRB index.

Alternatively, the start IRB and subsequent (N-1) IRBs in the resource pool constitute a first sub-channel, and the N^{th} IRB and subsequent (N-1) IRBs constitute a second sub-channel, and so on. The start IRB does not necessarily correspond to an IRB with a minimum IRB index. In such a configuration, different sub-channels do not overlap in the frequency domain, that is, different sub-channels are frequency division multiplexed.

It can be learned that in such a correspondence, a quantity of sub-channels is unrelated to a quantity of LBT sub-bands included in the resource pool. In other words, in a case that the resource pool includes a plurality of LBT sub-bands, the quantity of sub-channels remains unchanged. In this way, complexity of indicating sub-channels can be reduced, and indication overheads can be reduced to some extent.

Further, in another optional implementation, in a case that the N consecutive IRBs are located within the same resource block set, the indication information of the sub-channel includes at least any one of the following:
an index of the same resource block set;
an index of a start IRB in the N consecutive IRBs;
a quantity of the IRBs; or
indexes of all IRBs in the N consecutive IRBs.

For example, in a case that N = 1, the indication information of the sub-channel may include only the index of the same resource block set and the index of the IRB. In a case that N is greater than 1, the indication information of the sub-channel may include the index of the same resource block set, the index of the start IRB in the N consecutive IRBs, and the quantity of the IRBs. Alternatively, in a case that N is greater than 1, the indication information of the sub-channel may include the index of the same resource block set and the indexes of all the IRBs in the N consecutive IRBs.

For example, in a case that the resource pool includes one RB set, the start IRB and subsequent (N-1) IRBs constitute a first sub-channel, and the second IRB and subsequent (N-1) IRBs constitute a second sub-channel, and so on.

Alternatively, in a case that the resource pool includes one RB set, the start IRB and subsequent (N-1) IRBs constitute a first sub-channel, and the N^{th} IRB and subsequent (N-1) IRBs constitute a second sub-channel, and so on. In such a configuration, different sub-channels do not overlap in the frequency domain, that is, different sub-channels are frequency division multiplexed.

For another example, in a case that a resource pool includes a plurality of RB sets, a start IRB and subsequent (N-1) IRBs in the first RB set constitute a first sub-channel, where the subsequent (N-1) IRBs and the start IRB are located within the same RB set. The second IRB and subsequent (N-1) IRBs in the first RB set constitute a second sub-channel, where the N IRBs are located within the same RB set. The first IRB and subsequent (N-1) IRBs in the second RB set constitute the (m+1)^{th} sub-channel. Similarly, the N IRBs are required to be located within the same RB set. The second IRB and subsequent (N-1) IRBs in the second RB set constitute the (m+2)^{th} sub-channel. Here, m represents a quantity of sub-channels in the first RB set. The other RB sets are similar.

Alternatively, in a case that a resource pool includes a plurality of RB sets, a start IRB and subsequent (N-1) IRBs in the first RB set constitute a first sub-channel, where the subsequent (N-1) IRBs and the start IRB are located within the same RB set. The N^{th} IRB and subsequent (N-1) IRBs in the first RB set constitute a second sub-channel, where the N IRBs are located within the same RB set. The first IRB and subsequent (N-1) IRBs in the second RB set constitute the (m+1)^{th} sub-channel. Similarly, the N IRBs are required to be located within the same RB set. The N^{th} IRB and subsequent (N-1) IRBs in the second RB set constitute the (m+2)^{th} sub-channel, and the N IRBs are located within the same RB set. Here, m represents a quantity of sub-channels in the first RB set. The other RB sets are similar.

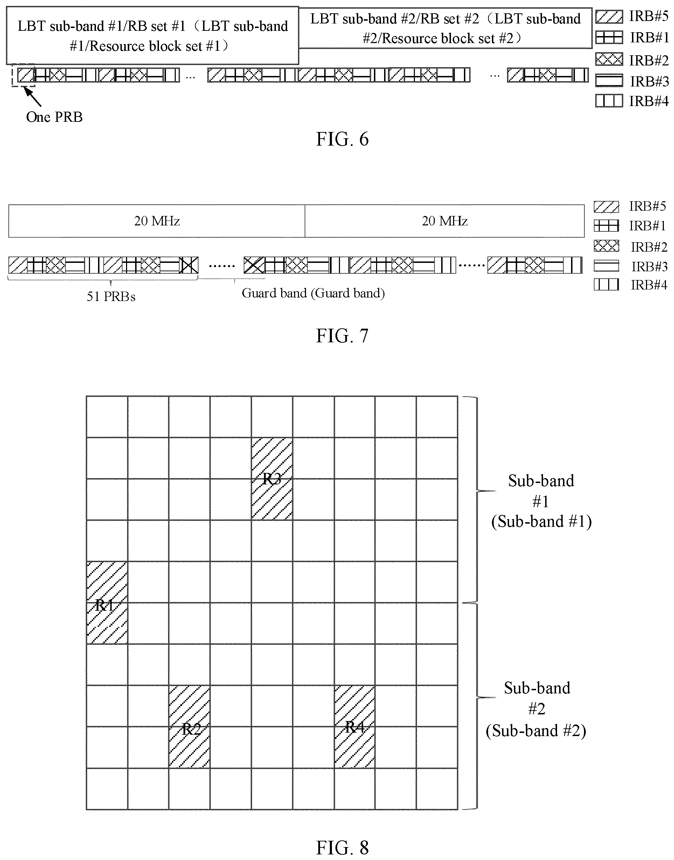

In a first specific example, as shown in FIG. 6, a resource pool includes two RB sets, with an SCS of 30 kHz and a total of 100 PRBs. In a case that one sub-channel occupies two IRBs, an index of the sub-channel is as follows:
a sub-channel 1 consisting of a part of an IRB #5 and an IRB #1 that is located within an RB set #1;
a sub-channel 2 consisting of a part of an IRB #1 and an IRB #2 that is located within an RB set #1;
a sub-channel 3 consisting of a part of an IRB #2 and an IRB #3 that is located within an RB set #1;
a sub-channel 4 consisting of a part of an IRB #3 and an IRB #4 that is located within an RB set #1;
a sub-channel 5 consisting of a part of an IRB #5 and an IRB #1 that is located within an RB set #2;
a sub-channel 6 consisting of a part of an IRB #1 and an IRB #2 that is located within an RB set #2;
a sub-channel 7 consisting of a part of an IRB #2 and an IRB #3 that is located within an RB set #2; and
a sub-channel 8 consisting of a part of an IRB #3 and an IRB #4 that is located within an RB set #2;
Note: The part of the IRB #4 located within the RB set #1 and the part of the IRB #1 located within the RB set #2 do not belong to a same sub-channel.

In a second specific example, as shown in FIG. 6, a resource pool includes two RB sets, with an SCS of 30 kHz and a total of 100 PRBs. In a case that one sub-channel occupies two IRBs, an index of the sub-channel is as follows:
a sub-channel 1 consisting of a part of an IRB #5 and an IRB #1 that is located within an RB set #1;
a sub-channel 2 consisting of a part of an IRB #2 and an IRB #3 that is located within an RB set #1;
a sub-channel 3 consisting of a part of an IRB #5 and an IRB #1 that is located within an RB set #2; and
a sub-channel 4 consisting of a part of an IRB #2 and an IRB #3 that is located within an RB set #2.

In a third specific example, as shown in FIG. 6, a resource pool includes two RB sets, with an SCS of 30 kHz and a total of 100 PRBs. In a case that one sub-channel occupies one IRB, an index of the sub-channel is as follows:
a sub-channel 1 consisting of a part of an IRB #5 that is located within an RB set #1; a sub-channel 2 consisting of a part of an IRB #1 that is located within an RB set #1; a sub-channel 3 consisting of a part of an IRB #2 that is located within an RB set #1; a sub-channel 4 consisting of a part of an IRB #3 that is located within an RB set #1; a sub-channel 5 consisting of a part of an IRB #4 that is located within an RB set #1;
a sub-channel 6 consisting of a part of an IRB #5 that is located within an RB set #2; a sub-channel 7 consisting of a part of an IRB #1 that is located within an RB set #2; a sub-channel 8 consisting of a part of an IRB #2 that is located within an RB set #2; a sub-channel 9 consisting of a part of an IRB #3 that is located within an RB set #2; and a sub-channel 10 consisting of a part of an IRB #4 that is located within an RB set #2.

In a fourth specific example, as shown in FIG. 6, a resource pool includes two RB sets, with an SCS of 30 kHz and a total of 100 PRBs. In a case that one sub-channel occupies one IRB, an index of the sub-channel is as follows:
a sub-channel 1 consisting of an IRB #5; a sub-channel 2 consisting of an IRB #1; a sub-channel 3 consisting of an IRB #2; a sub-channel 4 consisting of an IRB #3; and a sub-channel 5 consisting of an IRB #4.

In a fifth specific example, as shown in FIG. 6, a resource pool includes two RB sets, with an SCS of 30 kHz and a total of 100 PRBs. In a case that one sub-channel occupies two IRBs, an index of the sub-channel is as follows:
a sub-channel 1 consisting of an IRB #5 and an IRB #1; a sub-channel 2 consisting of an IRB #1 and an IRB #2; a sub-channel 3 consisting of an IRB #2 and an IRB #3; and a sub-channel 4 consisting of an IRB #3 and an IRB #4.

In a sixth specific example, as shown in FIG. 6, a resource pool includes two RB sets, with an SCS of 30 kHz and a total of 100 PRBs. In a case that one sub-channel occupies two IRBs, an index of the sub-channel is as follows:
a sub-channel 1 consisting of an IRB #5 and an IRB #1; and a sub-channel 2 consisting of an IRB #2 and an IRB #3.

In a seventh specific example, as shown in FIG. 6, a resource pool includes two RB sets, with an SCS of 30 kHz and a total of 100 PRBs. In a case that one sub-channel occupies two IRBs, an index of the sub-channel is as follows:
a sub-channel 1 consisting of an IRB #1 and an IRB #2; and a sub-channel 2 consisting of an IRB #3 and an IRB #4.

It can be learned that, in such a correspondence, a granularity of sub-channels is relatively small, but it can support more complex types of services. For example, for transmission of relatively small service packets, using the first correspondence may reduce spectrum utilization. However, accordingly, using the second correspondence causes indication to be more complicated, resulting in higher indication overheads than that of the first correspondence.

In addition, in the case of the second correspondence, that is, in a case that the sub-channel includes N IRBs located within the same RB set, sub-channels may be numbered by using any of the following methods:
Manner 1: Sub-channels in all RB sets are sequentially numbered jointly. For example, an RB set #1 and an RB set #2 each include five sub-channels, and the sub-channels are numbered as 1, 2, 3, 4, 5, 6, 7, 8, 9, and 10, respectively. Sub-channels 1 to 5 correspond to five sub-channels within the RB set #1, and sub-channels 6 to 10 correspond to five sub-channels within the RB set #2.
Manner 2: Sub-channels in each RB set are sequentially numbered independently. For example, an RB set #1 and an RB set #2 each include five sub-channels, and the sub-channels in each of the RB sets are numbered as 1, 2, 3, 4, and 5, respectively. When the terminal performs resource indication, it needs to indicate not only a sub-channel number but also an RB set number.

The size of the sub-channel includes:
the resource pool supporting sub-channels of different sizes.

In other words, based on whether a guard band (Guard band) can be used for transmission and whether some RBs in an IRB outside the guard band can be used for transmission, the resource pool may be configured to support sub-channels of different sizes, or the resource pool may be configured to support sub-channels of a same size.

Therefore, the resource pool configuration information may further include configuration information of a remaining resource block (Remaining RB), so as to indicate a PRB that is not allowed to be used for transmission or an IRB that is not allowed to be used for transmission.

Specifically, physical resource blocks PRB included in the sub-channel are all PRBs located outside a guard band in the N consecutive IRBs. In this manner, frequency resources may be fully utilized, thereby improving frequency utilization. It should be noted herein that, in a case that the resource pool supports sub-channels of different sizes or there is no limitation on the size of sub-channels supported by the resource pool, physical resource blocks PRB included in the sub-channel are all the PRBs located outside the guard band in the N consecutive IRBs.

Alternatively, PRBs included in the sub-channel are all PRBs located outside a guard band and excluding all remaining resource blocks RBs in the N consecutive IRBs. Similarly, in a case in which the resource pool supports sub-channels of a same size, or there is no limitation on the size of sub-channels supported by the resource pool, PRBs included in the sub-channel are all PRBs located outside the guard band in the N consecutive IRBs.

In other words, in a case that the resource pool supports sub-channels of a same size, after the guard band is excluded, a sub-channel may include IRBs having different quantities of PRBs. In this case, based on a minimum value in the quantities of PRBs included in different sub-channels, some PRBs in a sub-channel including IRBs with a quantity of PRBs being greater than the minimum value, are not allowed to be used for transmission, thereby ensuring that the same quantity of PRBs are included in each sub-channel. In this manner, processing complexity of the UE may be reduced to some extent. For example, different sub-channel sizes do not need to be considered in the calculation of the TBS.

Alternatively, PRBs included in the sub-channel are all PRBs in the N consecutive IRBs. Similarly, in a case that the resource pool supports sub-channels of different sizes, or there is no limitation on the size of sub-channels supported by the resource pool, PRBs included in the sub-channel are all PRBs in the N consecutive IRBs.

In other words, according to the foregoing embodiment, the guard band in the resource pool may be used in the following manner:
a frequency domain resource corresponding to the guard band is not allowed to be used for transmission, or a frequency domain resource corresponding to the guard band is allowed to be used for transmission.

For example, in a case that a bandwidth of a transmission resource is less than or equal to a bandwidth of one LBT sub-band, the terminal is not allowed to use a frequency domain resource corresponding to the guard band during transmission. In a case that a bandwidth of a transmission resource is greater than a bandwidth of one LBT sub-band, the terminal is allowed to use a frequency domain resource corresponding to the guard band during transmission.

Further, in a specific implementation, the method further includes:
determining a transport block size (TBS) based on a pre-agreed size of the sub-channel. For example, the TBS is determined based on a maximum value, a minimum value, or an average value of the size of sub-channels.

Alternatively, the transport block size is determined based on whether the guard band is used for transmission. For example, in a case that the terminal occupies only one sub-channel for transmission and the sub-channel is located within one sub-band, the guard band is not allowed to be used for transmission. In this case, the transport block size is determined based on a size of a current sub-channel (excluding the guard band). In a case that the terminal occupies a resource being greater than one sub-band, and the guard band is allowed to be used for transmission. In this case, the transport block size is determined based on a size of a current sub-channel (not excluding the guard band).

Alternatively, the transport block size is determined based on a frequency domain resource used for actual transmission. For example, the terminal may determine, based on all frequency domain resources in the resource pool, a maximum transport block size that can be supported, and then perform further conversion based on a resource used for actual transmission.

It should be noted herein that, in this specific implementation, the transport block size may be determined in the foregoing three manners in a case in which the resource pool supports sub-channels of different sizes, or there is no limitation on the size of sub-channels supported by the resource pool.

In a specific example of the foregoing optional implementation, as shown in FIG. 7, a resource pool includes two RB sets, with an SCS of 30 kHz, and one LBT sub-band has 51 available PRBs except the guard band. If one sub-channel corresponds to one IRB, for an LBT sub-band 1, an IRB #5 includes 11 PRBs, and the other four IRBs each include 10 PRBs.

Therefore, if the correspondence between the sub-channel and the IRB is that one sub-channel corresponds to N consecutive IRBs located within a same resource pool, and the resource pool supports sub-channels of different sizes, a sub-channel 1 (IRB #5) and a sub-channel 3 (IRB #2) each include 21 PRBs, a sub-channel 2 (IRB #1), a sub-channel 4 (IRB #3), and a sub-channel 5 (IRB #4) each include 20 PRBs. Finally, the transport block size (Transport Block Size, TBS) may be calculated based on the sub-channel 1 or 3, or the sub-channel 2, 4, or 5.

If the correspondence between the sub-channel and the IRB is that one sub-channel corresponds to N consecutive IRBs located within a same resource pool, and the resource pool supports sub-channels of a same size, a PRB in an IRB #5 and a PRB in an IRB #2 may be set to be remaining RBs, that is, they are not used for service transmission, thereby ensuring that each sub-channel includes the same quantity of PRBs.

If the correspondence between the sub-channel and the IRB is that one sub-channel corresponds to N consecutive IRBs located within a same RB set, and the resource pool supports sub-channels of different sizes, with the first LBT sub-band used as an example, a sub-channel 1 (IRB #5) includes 11 PRBs, and a sub-channel 2 (IRB #1), a sub-channel 3 (IRB #2), a sub-channel 4 (IRB #3), and a sub-channel 5 (IRB #4) each include 10 PRBs. Finally, the TBS may be calculated based on the sub-channel 1, or the sub-channel 2, 3, 4, or 5.

If the correspondence between the sub-channel and the IRB is that one sub-channel corresponds to N consecutive IRBs located within a same RB set, and the resource pool supports sub-channels of a same size, with a first LBT sub-band used as an example, a PRB in an IRB #5 may be set to be a remaining RB, thereby ensuring that each sub-channel includes 10 PRBs.

In a specific implementation, the frequency domain resource configuration information includes at least one of the following:
a start IRB index of a resource pool;
a start PRB index of a resource pool;
a quantity of sub-channels;
a quantity of IRBs included in the sub-channel; or
configuration information of a remaining resource block.

The start IRB index of the resource pool refers to a start IRB corresponding to the resource pool, which may be understood as a start IRB in a first sub-channel. The start PRB index of the resource pool refers to a start PRB corresponding to the resource pool, which may be understood as a start PRB in a first sub-channel. In addition, the frequency domain resource configuration information may include both the start IRB index of the resource pool and the start PRB index of the resource pool. The size of the resource pool refers to a quantity of IRBs included in a sub-channel.

According to the sidelink resource selection method in embodiments of the present application, the correspondence between the sub-channel (a minimum granularity of resource allocation) and the IRB is set, so that complexity of indication by the UE may be reduced. Also, a foundation for service transmission and resource allocation mechanisms is established, so that a selected resource can meet OCB and PSD limitation requirements, and providing a complete implementation solution for the resource selection mechanism for sidelink on unlicensed spectrum.

As shown in FIG. 4, an embodiment of the present application further provides a sidelink resource selection method. The method includes the following step:
Step 401: selecting, from a resource pool, a first resource used to transmit a physical sidelink control channel (Physics Sidelink Control Channel, PSCCH) and a physical sidelink shared channel (Physics Sidelink Shared Channel, PSCCH); and/or
selecting, from the resource pool, a second resource used to transmit a physical sidelink feedback channel (Physics Sidelink Feedback Channel, PSFCH).

It should be noted herein that, in a case in which the resource pool supports HARQ feedback, the sidelink resource selection method in embodiments of the present application includes the step of selecting, from the resource pool, a second resource used to transmit a PSFCH.

In an optional implementation, Step 401 of selecting a first resource used to transmit a PSCCH and a PSSCH includes:
preferentially selecting the first resource from a same LBT sub-band.

Specifically, in this optional implementation, in a case in which the resource pool includes a plurality of LBT sub-bands and a bandwidth required to be occupied for transmission by a user equipment UE is less than or equal to one LBT sub-band, the first resource is preferentially selected from a same LBT sub-band. Alternatively, in a case that there is no any limitations, the first resource may be preferentially selected from a same LBT sub-band.

Further, in an optional implementation, in a case of failing to select the first resource from the same LBT sub-band, the first resource is selected from a plurality of LBT sub-bands in the resource pool. Alternatively, in a case of failing to select the first resource from the same LBT sub-band, the first resource is selected from a resource set including all the LBT sub-bands.

It should be noted herein that, this optional implementation is applicable to a single transmission, that is, a resource used by the UE for an initial transmission or a specific retransmission, is preferentially selected from the same LBT sub-band. In addition, this optional implementation is also applicable to multiple transmissions, that is, resources for an initial transmission and a retransmission are also preferentially selected from the same LBT sub-band. In this optional implementation, all transmission resources are preferentially selected from one LBT sub-band, which may reduce complexity of the LBT, from an LBT perspective. This is because only one LBT sub-band needs to be monitored to detect whether it is idle, in this case, a probability that transmission cannot be performed due to an LBT failure can be reduced, thereby further ensuring transmission efficiency and reliability.

In a specific implementation, Step 401 of selecting, from a resource pool, a first resource used to transmit a physical sidelink control channel PSCCH and a physical sidelink shared channel PSSCH includes:
(1) determining available resource sets respectively for a plurality of LBT sub-bands based on a resource exclusion result, that is, after performing resource exclusion, determining, by the UE, an available resource set S_Aᵢ for each of different LBT sub-bands, where i represents an index of an LBT sub-band.

It should be noted herein that, after each available resource set is determined, a physical layer of the UE reports the available resource sets for the LBT sub-bands to a medium access control (Media Access Conrtol, MAC) layer.
(2) selecting the first resource from any one of the available resource sets. In other words, the UE first selects, from any S_Aᵢ, a resource required for transmission; and in a case of failing to select the first resource from a first available resource set (S_A₁), the first resource is selected from a second available resource set (S_A₂), and so on, until the first resource is selected.

Further, the method further includes:
in a case that each of the available resource sets fails in selecting the first resource from only the respective available resource set , selecting the first resource from at least two of the available resource sets. In other words, if the resource cannot be successfully selected from any S_Aᵢ, the UE selects the transmission resource from the S_A. S_A includes resources of at least two S_ Aᵢ, or S_A includes resources of all the S_Aᵢ.

It should be noted herein that, according to the resource selection method in this specific implementation, all transmission resources are preferentially selected from one LBT sub-band, which may reduce complexity of the LBT from an LBT perspective. This is because only one LBT sub-band needs to be monitored to detect whether it is idle, in this case, a probability that transmission cannot be performed due to an LBT failure can be reduced, thereby further ensuring transmission efficiency and reliability, and increasing a probability of channel access.

In a specific example of this specific implementation, as shown in FIG. 8, after resource exclusion is performed, four available resources are determined, which are R1, R2, R3, and R4, respectively. A quantity of transmissions of the UE is 2, that is, two resources need to be selected. The UE preferentially selects R2 and R4 as the transmission resources because R1 spans across two LBT sub-bands, R2 and R3 are located in different LBT sub-bands, and R4 and R3 are located in different LBT sub-bands.

In an optional implementation, Step 401 of selecting, from the resource pool, a second resource used to transmit a physical sidelink feedback channel PSFCH includes:

in a case that a PSSCH corresponding to the PSFCH is located in a plurality of LBT sub-bands, and the second resource are mapped in all the plurality of LBT sub-bands, selecting the second resource includes any one of the following:
(1) selecting the second resource based on a slot index of the PSSCH corresponding to the PSFCH and an index of a start sub-channel.

In other words, in a case that the UE occupies a plurality of LBT sub-bands, the PSFCH resource (the second resource) are mapped in all the plurality of LBT sub-bands . The method for mapping the PSFCH resource (the second resource) is mapping the PSFCH resource based on a slot number and a number of a start sub-channel of an associated PSSCH. In a case that the UE occupies a plurality of LBT sub-bands, an index of a PSSCH transmission resource corresponding to the PSFCH in each LBT sub-band is numbered independently.
(2) selecting the second resource based on the slot index of the PSSCH corresponding to the PSFCH and an index of a sub-channel corresponding to the first resource in each of the LBT sub-bands.

In other words, in a case that the UE occupies a plurality of LBT sub-bands, the PSFCH resource (the second resource) are mapped in all the plurality of LBT sub-bands. A method for mapping between a PSSCH resource (the first resource) and the PSFCH resource (the second resource) is mapping the PSFCH resource based on a slot (slot) number of an associated PSSCH and a number of a sub-channel occupied for transmission of the PSSCH. In other words, for mapping in different LBT sub-bands, the PSFCH resource is mapped based on the number of the sub-channel, occupied by the PSSCH transmission, in the corresponding LBT sub-band.

In addition, in a case that a PSSCH corresponding to the PSFCH is located within a single LBT sub-band, and the second resource is mapped in all the plurality of LBT sub-bands, selecting the second resource includes any one of the following:
(1) selecting the second resource based on a slot index of the PSSCH corresponding to the PSFCH and an index of a start sub-channel; or
(2) selecting the second resource based on the slot index of the PSSCH corresponding to the PSFCH and an index of a sub-channel corresponding to the first resource in each of the LBT sub-bands.

In this optional implementation, a probability of successful PSFCH transmission may be increased by mapping the PSFCH resource in a plurality of sub-bands. In this way, a method for mapping PSFCH resources across a plurality of sub-bands is clearly defined, so that the method may be applied to a scenario of a plurality of LBT sub-bands for sidelink on unlicensed spectrum.

Specifically, the start sub-channel is a start sub-channel of the first resource in the resource pool, or the start sub-channel is a start sub-channel of the first resource in each of the LBT sub-bands.

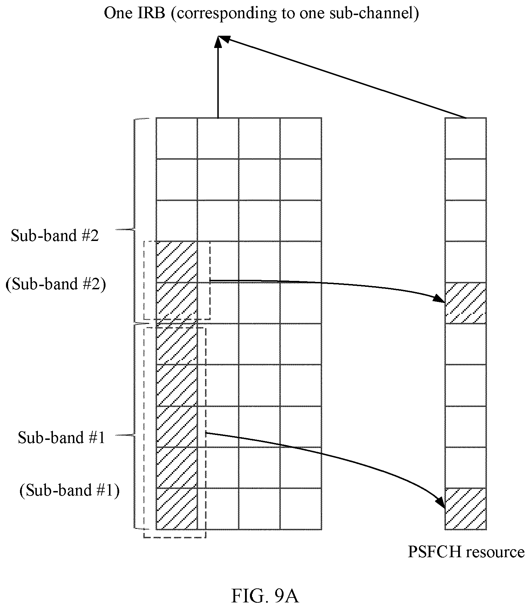

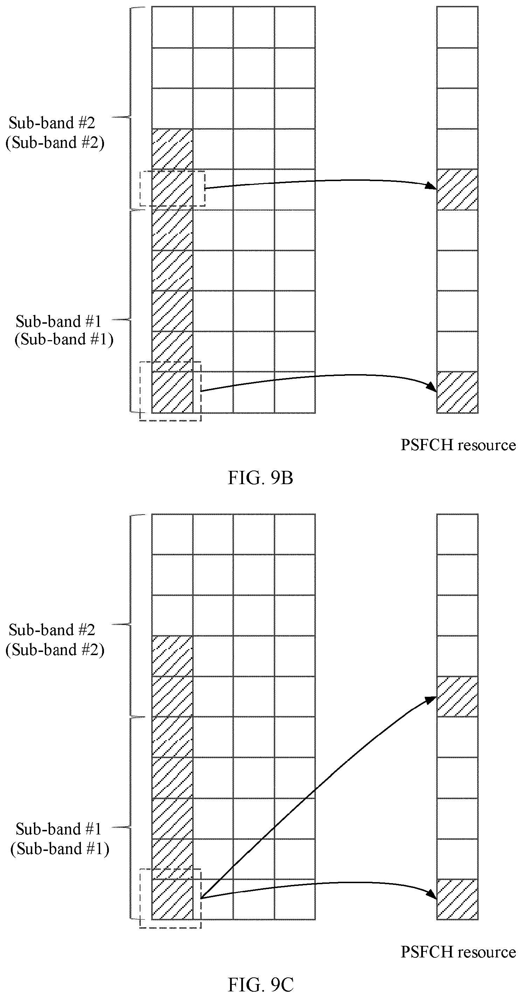

In a specific example of this optional implementation, as shown in FIG. 9A, in a case that the method for mapping between the PSSCH resource (the first resource) and the PSFCH resource (the second resource) is mapping the PSFCH resource based on a slot number of an associated PSSCH and a number of a sub-channel occupied by transmission of the PSSCH, a feedback resource in each of the two LBT sub-bands is determined based on all sub-channels, located in the respective LBT sub-band, for the PSSCH. As shown in FIG. 9B, in a case that the method for mapping between the PSSCH resource (the first resource) and the PSFCH resource (the second resource) is mapping the PSFCH resource based on a slot number and a number of a start sub-channel of an associated PSSCH, and the start sub-channel is a start sub-channel in each of the LBT sub-bands, a feedback resource in each of the two LBT sub-bands may be determined based on the start sub-channel, located in the respective LBT sub-band, for the PSSCH. As shown in FIG. 9C, in a case that the method for mapping between the PSSCH resource (the first resource) and the PSFCH resource (the second resource) is mapping the PSFCH resource based on a slot number of an associated PSSCH and a number of a start sub-channel, and the start sub-channel is a start sub-channel of the first resource, a feedback resource in each of the two LBT sub-bands may be determined based on the start sub-channel for the PSSCH.

Further, in an optional implementation, the method further includes:
transmitting first-stage sidelink control information (Sidelink Control Information, SCI), where the first-stage SCI includes a first indication field, and the first indication field indicates, in at least one of following manners, an LBT sub-band where the PSCCH and the PSSCH are located:
P*log2 (M), where P denotes a configured or preconfigured maximum quantity of resources reservable by SCI, and M denotes a quantity of LBT sub-bands included in the first resource pool;
a bitmap, requiring a quantity of bits of P*M; or
joint coding.

In addition, it should be also noted that the sidelink resource selection method includes:
S1: obtaining resource pool configuration information; and
S2. performing resource selection in a resource pool corresponding to the resource pool configuration information.

Specifically, the sidelink resource selection method in embodiments of the present application may be used to improve only the resource pool configuration information in Step 1, for example, using the method illustrated in FIG. 3, or may improve only the resource selection method in Step S2, for example, by using the method illustrated in FIG. 4, or may improve both Step S1 and Step S2.

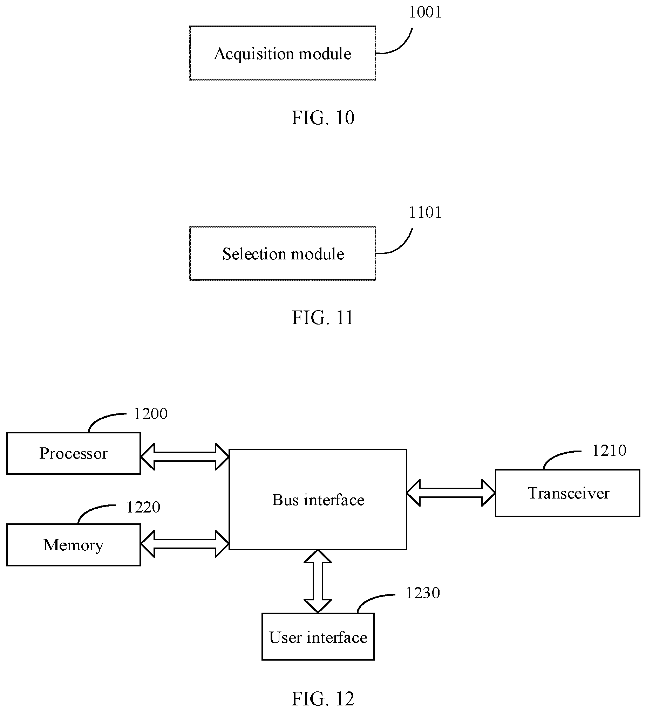

As shown in FIG. 10, an embodiment of the present application further provides a sidelink resource selection apparatus. The apparatus includes:
an acquisition module 1001, configured to acquire configured or preconfigured resource pool configuration information, where the resource pool configuration information includes frequency domain resource configuration information and/or configuration information of a sub-channel, and the sub-channel includes an interlaced resource block IRB.

The configuration information of a sub-channel includes:
indication information of the sub-channel;
a correspondence between the sub-channel and the IRB; and
a size of the sub-channel.

The correspondence between the sub-channel and the IRB includes:
each sub-channel consists of N consecutive IRBs located within a same resource block set,
where N is a configured or preconfigured positive integer.

Optionally, in a case that the N consecutive IRBs are located within the same resource pool, the indication information of the sub-channel includes any one of the following:
an index of a start IRB in the N consecutive IRBs and a quantity of the IRBs; or
indexes of all IRBs in the N consecutive IRBs.

Optionally, in a case that the N consecutive IRBs are located within the same resource block set, the indication information of the sub-channel includes at least any one of the following:
an index of the same resource block set;
an index of a start IRB in the N consecutive IRBs;
a quantity of the IRBs; or
indexes of all IRBs in the N consecutive IRBs.

The size of the sub-channel includes:
the resource pool supporting sub-channels of different sizes.

In a case in which the resource pool supports sub-channels of different sizes, physical resource blocks PRB included in the sub-channel are all PRBs located outside a guard band in the N consecutive IRBs;
in a case in which the resource pool supports sub-channels of a same size, PRBs included in the sub-channel are all PRBs located outside a guard band and excluding all remaining resource blocks RBs in the N consecutive IRBs; or
in a case in which the resource pool supports sub-channels of a same size, PRBs included in the sub-channel are all PRBs in the N consecutive IRBs.

Optionally, the apparatus further includes a determining module, configured to:
determine a transport block size based on a pre-agreed size of the sub-channel;
determine a transport block size based on whether a guard band is used for transmission; or
determine a transport block size based on a frequency domain resource used for actual transmission.

Optionally, the frequency domain resource configuration information includes at least one of the following:
a start IRB index of a resource pool;
an index of a start RPB in a resource pool;
a quantity of sub-channels;
a quantity of IRBs included in the sub-channel; or
configuration information of a remaining resource block.

It should be noted herein that, the sidelink resource selection apparatus provided in embodiments of the present application can implement all method steps implemented in the foregoing embodiments of the sidelink resource selection method illustrated in FIG. 3, and can achieve same technical effects. Herein, same parts and beneficial effects as those of the method embodiments are not repeated herein in this embodiment.

As shown in FIG. 11, an embodiment of the present application further provides a sidelink resource selection apparatus. The apparatus includes a selection module 1101, configured to:
select, from a resource pool, a first resource used to transmit a physical sidelink control channel PSCCH and a physical sidelink shared channel PSSCH; and/or
select, from the resource pool, a second resource used to transmit a physical sidelink feedback channel PSFCH.

Optionally, the selection module 1101 includes:
a first selection sub-module, configured to: in a case in which the resource pool includes a plurality of LBT sub-bands and a bandwidth required to be occupied for transmission by a user equipment UE is less than or equal to one of the LBT sub-bands, preferentially select the first resource from a same LBT sub-band.

Optionally, the selection module 1101 includes:
a second selection sub-module, configured to select the first resource from the plurality of LBT sub-bands in the resource pool.

Optionally, the selection module 1101 includes:
a determining sub-module, configured to determine available resource sets respectively for a plurality of LBT sub-bands based on a resource exclusion result; and
a third selection sub-module, configured to select the first resource from any one of the available resource sets.

Further, the selection module 1101 further includes:
a fourth selection sub-module, configured to: in a case that each of the available resource sets fails in selecting the first resource from only the respective available resource set , select the first resource from at least two of the available resource sets.

Optionally, the selection module 1101 is specifically configured to:
in a case that a PSSCH corresponding to the PSFCH is located in a plurality of LBT sub-bands, and the second resource is mapped in all the plurality of LBT sub-bands, select the second resource by any one of the following:
selecting the second resource based on a slot index of the PSSCH corresponding to the PSFCH and an index of a start sub-channel; or
selecting the second resource based on the slot index of the PSSCH corresponding to the PSFCH and an index of a sub-channel corresponding to the first resource in each of the LBT sub-bands.

Optionally, the start sub-channel is a start sub-channel of the first resource in the resource pool, or the start sub-channel is a start sub-channel of the first resource in each of the LBT sub-bands.

Optionally, the apparatus further includes:
a transmitting module, configured to transmit first-stage sidelink control information SCI, where the first-stage SCI includes a first indication field, and the first indication field indicates, in at least one of following manners, an LBT sub-band where the PSCCH and the PSSCH are located:
P*log2 (M), where P denotes a configured or preconfigured maximum quantity of resources reservable by SCI, and M denotes a quantity of LBT sub-bands included in the first resource pool;
a bitmap, requiring a quantity of bits of P*M; or
joint coding.

Optionally, the resource pool in embodiments of the present application is a resource pool configured based on resource pool configuration information, in the sidelink resource selection method as described above.

It should be noted herein that, the sidelink resource selection apparatus provided in embodiments of the present application can implement all method steps implemented in the foregoing embodiments of the sidelink resource selection method illustrated in FIG. 4, and can achieve same technical effects. Herein, same parts and beneficial effects as those of the method embodiments are not repeated herein in this embodiment.

As shown in FIG. 12, an embodiment of the present application further provides a terminal. The terminal includes a transceiver 1210, a memory 1220, a processor 1200, and a computer program stored in the memory 1220 and running on the processor 1200. The computer program, when executed by the processor 1200, implements processes of the embodiments of the sidelink resource selection method as described above, and a same technical effect can be achieved. To avoid repetition, details are not described herein.

The transceiver 1210 is configured to receive and transmit data under the control of the processor 1200.

In FIG. 12, a bus architecture may include any quantity of interconnected buses and bridges, and specifically interconnect various circuits of one or more processors represented by the processor 1200 and a memory represented by the memory 1220. The bus architecture may further interconnect various other circuits such as a peripheral device, a voltage regulator, and a power management circuit. These are all well known in the art, and therefore are not further described in this specification. The bus interface provides an interface. The transceiver 1210 may be a plurality of elements, including a transmitter and a receiver, and provides units for communicating with a variety of other apparatuses over a transmission medium. For different user equipments, a user interface 1230 may alternatively be an interface capable of externally or internally connecting a required device, and the connected device includes, but is not limited to, a keypad, a display, a speaker, a microphone, a joystick, or the like.

The processor 1200 is responsible for management of the bus architecture and general processing, and the memory 1220 may store data that is used when the processor 1200 performs operations.

A person skilled in the art may understand that all or some of the steps of the foregoing embodiments may be implemented by hardware, or may be implemented by a computer program indicating related hardware, and the computer program includes instructions for executing some or all of the steps of the foregoing methods. In addition, the computer program may be stored in a readable storage medium, and the storage medium may be any form of storage medium.

In addition, an embodiment of the present application further provides a computer-readable storage medium storing a program. The program, when executed by a processor, implements processes of the embodiments of the sidelink resource selection method as described above, and a same technical effect can be achieved. To avoid repetition, details are not described herein again. The computer-readable storage medium includes a read-only memory (Read-Only Memory, ROM), a random access memory (Random Access Memory, RAM), a magnetic disk, or a compact disc.

The foregoing descriptions are merely the preferred implementations of the present application. It should only be noted that those of ordinary skill in the art may further make various improvements and modifications without departing from the scope of the present application, and these improvements and modifications also fall within the protection scope of the present application.

## Claims

1. A sidelink resource selection method, comprising:
acquiring (301) configured or preconfigured resource pool configuration information, wherein the resource pool configuration information comprises frequency domain resource configuration information and configuration information of a sub-channel, and the sub-channel comprises an interlaced resource block, IRB,
wherein the configuration information of the sub-channel comprises:
indication information of the sub-channel;
a correspondence between the sub-channel and the IRB; and
a size of the sub-channel;
wherein the correspondence between the sub-channel and the IRB comprises:
each sub-channel consists of N consecutive IRBs located within a same resource block set,
wherein N is a configured or preconfigured positive integer;
wherein the size of the sub-channel comprises the resource pool supporting sub-channels of different sizes;
**characterized in that**:
in the case in which the resource pool supports sub-channels of different sizes, physical resource blocks, PRBs, comprised in the sub-channel are all PRBs located outside a guard band in the N consecutive IRBs.

2. The method according to claim 1, wherein in a case that the N consecutive IRBs are located within the same resource block set, the indication information of the sub-channel comprises:
a quantity of the IRBs.

3. The method according to claim 1, wherein the method further comprises:
determining a transport block size based on a pre-agreed size of the sub-channel;
determining a transport block size based on whether a guard band is used for transmission; or
determining a transport block size based on a frequency domain resource used for actual transmission.

4. The method according to claim 1, wherein the frequency domain resource configuration information comprises at least one of following:
a start IRB index of a resource pool;
a start PRB index of a resource pool;
a quantity of sub-channels;
a quantity of IRBs comprised in the sub-channel; or
configuration information of a remaining resource block.

5. The method according to any one of claims 1 to 4, further comprising:
selecting (401), from a resource pool, a first resource used to transmit a physical sidelink control channel, PSCCH, and a physical sidelink shared channel, PSSCH; and/or
selecting (401), from the resource pool, a second resource used to transmit a physical sidelink feedback channel, PSFCH, wherein the resource pool is a resource pool configured based on the resource pool configuration information.

6. The method according to claim 5, wherein the selecting, from a resource pool, a first resource used to transmit a PSCCH and a PSSCH comprises:
selecting the first resource from a same LBT sub-band.

7. The method according to claim 5, wherein the selecting, from a resource pool, a first resource used to transmit a PSCCH and a PSSCH comprises:
determining available resource sets respectively for a plurality of LBT sub-bands based on a resource exclusion result; and
selecting the first resource from any one of the available resource sets.

8. The method according to claim 5, wherein the selecting, from the resource pool, a second resource used to transmit a PSFCH comprises:
in a case that a PSSCH corresponding to the PSFCH is located in a plurality of LBT sub-bands, and the second resource is mapped in all the plurality of LBT sub-bands, selecting the second resource comprises any one of following:
selecting the second resource based on a slot index of the PSSCH corresponding to the PSFCH and an index of a start sub-channel; and
selecting the second resource based on the slot index of the PSSCH corresponding to the PSFCH and an index of a sub-channel corresponding to the first resource in each of the LBT sub-bands.

9. The method according to claim 5, further comprising:
transmitting first-stage sidelink control information, SCI, wherein the first-stage SCI comprises a first indication field, and the first indication field indicates, in at least one of following manners, an LBT sub-band where the PSCCH and the PSSCH are located:
P*log2 (M), wherein P denotes a configured or preconfigured maximum quantity of resources reservable by SCI, and M denotes a quantity of LBT sub-bands comprised in the resource pool; or
a bitmap, requiring a quantity of bits of P*M.

10. A terminal, comprising a transceiver, a memory (1220), a processor (1200), and a computer program stored in the memory (1220) and running on the processor (1200), wherein the computer program, when executed by the processor (1200), implements steps of the sidelink resource selection method according to any one of claims 1 to 9.

## Patentansprüche

1. Ein Sidelink-Ressourcenauswahlverfahren, das Folgendes beinhaltet:
Erfassen (301) konfigurierter oder vorkonfigurierter Ressourcenpool-Konfigurationsinformationen, wobei die Ressourcenpool-Konfigurationsinformationen Frequenzdomänen-Ressourcenkonfigurationsinformationen und
Konfigurationsinformationen eines Unterkanals beinhalten und der Unterkanal einen Interlaced-Ressourcenblock, IRB, beinhaltet,
wobei die Konfigurationsinformationen des Unterkanals Folgendes beinhalten:
Anzeigeinformationen des Unterkanals;
eine Entsprechung zwischen dem Unterkanal und dem IRB; und
eine Größe des Unterkanals;
wobei die Entsprechung zwischen dem Unterkanal und dem IRB Folgendes beinhaltet:
jeder Unterkanal besteht aus N aufeinanderfolgenden IRBs, die sich innerhalb eines gleichen Ressourcenblocksatzes befinden,
wobei N eine konfigurierte oder vorkonfigurierte positive ganze Zahl ist;
wobei die Größe des Unterkanals beinhaltet, dass der Ressourcenpool Unterkanäle unterschiedlicher Größen unterstützt;
**dadurch gekennzeichnet, dass**:
in dem Fall, in dem der Ressourcenpool Unterkanäle unterschiedlicher Größen unterstützt, physische Ressourcenblöcke, PRBs, die in dem Unterkanal beinhaltet sind, alle PRBs sind, die sich außerhalb eines Schutzbands in den N aufeinanderfolgenden IRBs befinden.

2. Verfahren gemäß Anspruch 1, wobei in einem Fall, in dem sich die N aufeinanderfolgenden IRBs innerhalb des gleichen Ressourcenblocksatzes befinden, die Anzeigeinformationen des Unterkanals Folgendes beinhalten:
eine Menge der IRBs.

3. Verfahren gemäß Anspruch 1, wobei das Verfahren ferner Folgendes beinhaltet:
Bestimmen einer Transportblockgröße basierend auf einer vorab vereinbarten Größe des Unterkanals;
Bestimmen einer Transportblockgröße basierend darauf, ob ein Schutzband zur Übertragung verwendet wird; oder
Bestimmen einer Transportblockgröße basierend auf einer
Frequenzdomänenressource, die zur tatsächlichen Übertragung verwendet wird.

4. Verfahren gemäß Anspruch 1, wobei die Frequenzdomänen-Ressourcenkonfigurationsinformationen mindestens eines der Folgenden beinhalten:
einen Anfangs-IRB-Index eines Ressourcenpools;
einen Anfangs-PRB-Index eines Ressourcenpools;
eine Menge von Unterkanälen;
eine Menge von IRBs, die in dem Unterkanal beinhaltet sind; oder
Konfigurationsinformationen eines verbleibenden Ressourcenblocks.

5. Verfahren gemäß einem der Ansprüche 1 bis 4, das ferner Folgendes beinhaltet:
Auswählen (401), aus einem Ressourcenpool, einer ersten Ressource, die zum Übertragen eines physischen Sidelink-Steuerkanals, PSCCH, und eines gemeinsamen physischen Sidelink-Kanals, PSSCH, verwendet wird; und/oder
Auswählen (401), aus dem Ressourcenpool, einer zweiten Ressource, die zum Übertragen eines physischen Sidelink-Rückkopplungskanals, PSFCH, verwendet wird, wobei der Ressourcenpool ein Ressourcenpool ist, der basierend auf den Ressourcenpool-Konfigurationsinformationen konfiguriert ist.

6. Verfahren gemäß Anspruch 5, wobei das Auswählen, aus einem Ressourcenpool, einer ersten Ressource, die zum Übertragen eines PSCCH und eines PSSCH verwendet wird, Folgendes beinhaltet:
Auswählen der ersten Ressource aus einem gleichen LBT-Teilband.

7. Verfahren gemäß Anspruch 5, wobei das Auswählen, aus einem Ressourcenpool, einer ersten Ressource, die zum Übertragen eines PSCCH und eines PSSCH verwendet wird, Folgendes beinhaltet:
Bestimmen verfügbarer Ressourcensätze jeweils für eine Vielzahl von LBT-Teilbändern basierend auf einem Ressourcenausschlussergebnis; und
Auswählen der ersten Ressource aus einem beliebigen der verfügbaren Ressourcensätze.

8. Verfahren gemäß Anspruch 5, wobei das Auswählen, aus dem Ressourcenpool, einer zweiten Ressource, die zum Übertragen eines PSFCH verwendet wird, Folgendes beinhaltet:
in einem Fall, in dem sich ein PSSCH, der dem PSFCH entspricht, in einer Vielzahl von LBT-Teilbändern befindet und die zweite Ressource in allen der Vielzahl von LBT-Teilbändern abgebildet ist, das Auswählen der zweiten Ressource eines der Folgenden beinhaltet:
Auswählen der zweiten Ressource basierend auf einem Slot-Index des PSSCH, der dem PSFCH entspricht, und einem Index eines Anfangs-Unterkanals; und
Auswählen der zweiten Ressource basierend auf dem Slot-Index des PSSCH, der dem PSFCH entspricht, und einem Index eines Unterkanals, der der ersten Ressource in jedem der LBT-Teilbänder entspricht.

9. Verfahren gemäß Anspruch 5, das ferner Folgendes beinhaltet:
Übertragen von Sidelink-Steuerinformationen, SCI, der ersten Stufe, wobei die SCI der ersten Stufe ein erstes Anzeigefeld beinhaltet und das erste Anzeigefeld auf mindestens eine der folgenden Weisen ein LBT-Teilband anzeigt, in dem sich der PSCCH und der PSSCH befinden:
P*log2 (M), wobei P eine konfigurierte oder vorkonfigurierte maximale Menge von Ressourcen bezeichnet, die durch SCI reserviert werden können, und M eine Menge von LBT-Teilbändern bezeichnet, die in dem Ressourcenpool beinhaltet sind; oder
eine Bitmap, die eine Menge von Bits von P*M erfordert.

10. Ein Endgerät, das einen Transceiver, einen Speicher (1220), einen Prozessor (1200) und ein Computerprogramm beinhaltet, das in dem Speicher (1220) gespeichert ist und auf dem Prozessor (1200) läuft, wobei das Computerprogramm, wenn es durch den Prozessor (1200) ausgeführt wird, Schritte des Sidelink-Ressourcenauswahlverfahrens gemäß einem der Ansprüche 1 bis 9 implementiert.

## Revendications

1. Un procédé de sélection de ressources de liaison latérale (*sidelink*), comprenant :
l'acquisition (301) d'informations de configuration de réserves de ressources configurées ou préconfigurées, où les informations de configuration de réserves de ressources comprennent des informations de configuration de ressources de domaine fréquentiel et des informations de configuration d'un sous-canal, et le sous-canal comprend un IRB (*Interlaced Resource Block*, bloc de ressources entrelacé),
où les informations de configuration du sous-canal comprennent :
des informations d'indication du sous-canal ;
une correspondance entre le sous-canal et l'IRB ; et
une taille du sous-canal ;
où la correspondance entre le sous-canal et l'IRB comprend :
chaque sous-canal est constitué de N IRB consécutifs situés dans un même ensemble de blocs de ressources,
où N est un entier positif configuré ou préconfiguré ;
où la taille du sous-canal comprend le fait que la réserve de ressources prend en charge des sous-canaux de tailles différentes ;
**caractérisé en ce que** :
dans le cas où la réserve de ressources prend en charge des sous-canaux de tailles différentes, des PRB (*Physical Resource Blocks*, blocs de ressources physiques) compris dans le sous-canal sont tous des PRB situés à l'extérieur d'une bande de garde dans les N IRB consécutifs.

2. Le procédé selon la revendication 1, où dans un cas où les N IRB consécutifs sont situés dans le même ensemble de blocs de ressources, les informations d'indication du sous-canal comprennent :
une quantité des IRB.

3. Le procédé selon la revendication 1, où le procédé comprend en outre :
la détermination d'une taille de bloc de transport sur la base d'une taille pré-convenue du sous-canal ;
la détermination d'une taille de bloc de transport sur la base du fait qu'une bande de garde est ou non utilisée pour une transmission ; ou
la détermination d'une taille de bloc de transport sur la base d'une ressource de domaine fréquentiel utilisée pour une transmission réelle.

4. Le procédé selon la revendication 1, où les informations de configuration de ressources de domaine fréquentiel comprennent au moins l'un des éléments suivants :
un index d'IRB de début d'une réserve de ressources ;
un index de PRB de début d'une réserve de ressources ;
une quantité de sous-canaux ;
une quantité d'IRB compris dans le sous-canal ; ou
des informations de configuration d'un bloc de ressources restant.

5. Le procédé selon l'une quelconque des revendications 1 à 4, comprenant en outre :
la sélection (401), à partir d'une réserve de ressources, d'une première ressource utilisée pour transmettre un PSCCH (*Physical Sidelink Control CHannel*, canal de commande de liaison latérale physique), et un PSSCH (*Physical Sidelink Shared CHannel*, canal partagé de liaison latérale physique) ; et/ou
la sélection (401), à partir de la réserve de ressources, d'une deuxième ressource utilisée pour transmettre un PSFCH (*Physical Sidelink Feedback CHannel*, canal de rétroaction de liaison latérale physique), où la réserve de ressources est une réserve de ressources configurée sur la base des informations de configuration de réserves de ressources.

6. Le procédé selon la revendication 5, où la sélection, à partir d'une réserve de ressources, d'une première ressource utilisée pour transmettre un PSCCH et un PSSCH comprend :
la sélection de la première ressource à partir d'une même sous-bande LBT.

7. Le procédé selon la revendication 5, où la sélection, à partir d'une réserve de ressources, d'une première ressource utilisée pour transmettre un PSCCH et un PSSCH comprend :
la détermination d'ensembles de ressources disponibles respectivement pour une pluralité de sous-bandes LBT sur la base d'un résultat d'exclusion de ressources ; et
la sélection de la première ressource à partir de l'un quelconque des ensembles de ressources disponibles.

8. Le procédé selon la revendication 5, où la sélection, à partir de la réserve de ressources, d'une deuxième ressource utilisée pour transmettre un PSFCH comprend :
dans un cas où un PSSCH correspondant au PSFCH est situé dans une pluralité de sous-bandes LBT, et la deuxième ressource est mappée dans toute la pluralité de sous-bandes LBT, la sélection de la deuxième ressource comprend l'un quelconque des éléments suivants :
la sélection de la deuxième ressource sur la base d'un index de créneau du PSSCH correspondant au PSFCH et d'un index d'un sous-canal de début ; et
la sélection de la deuxième ressource sur la base de l'index de créneau du PSSCH correspondant au PSFCH et d'un index d'un sous-canal correspondant à la première ressource dans chacune des sous-bandes LBT.

9. Le procédé selon la revendication 5, comprenant en outre :
la transmission de SCI (*Sidelink Control Information*, informations de commande de liaison latérale) de premier étage, où les SCI de premier étage comprennent un premier champ d'indication, et le premier champ d'indication indique, d'au moins l'une des manières suivantes, une sous-bande LBT où le PSCCH et le PSSCH sont situés :
P*log2 (M), où P désigne une quantité maximale configurée ou préconfigurée de ressources réservables par SCI, et M désigne une quantité de sous-bandes LBT comprises dans la réserve de ressources ; ou
un bitmap, nécessitant une quantité de bits de P*M.

10. Un terminal, comprenant un émetteur-récepteur, une mémoire (1220), un processeur (1200), et un programme informatique stocké dans la mémoire (1220) et tournant sur le processeur (1200), où le programme informatique, lorsqu'il est exécuté par le processeur (1200), met en œuvre des étapes du procédé de sélection de ressources de liaison latérale selon l'une quelconque des revendications 1 à 9.
